# EUROPEAN PATENT SPECIFICATION

(11) **EP 4 010 450 B1**
(45) Date of publication and mention of the grant of the patent: **11.02.2026**
(21) Application number: 19941103.4
(22) Date of filing: 09.08.2019
(51) Int. Cl.: C09K 21/12, C08K 5/5399, C08L 75/04, C09K 21/10

(54) **FLAME RETARDANT COMPOSITION AND FLAME RETARDANT THERMOPLASTIC POLYURETHANE COMPOSITION**
FLAMMHEMMENDE ZUSAMMENSETZUNG UND FLAMMHEMMENDE THERMOPLASTISCHE POLYURETHANZUSAMMENSETZUNG
COMPOSITION IGNIFUGE ET COMPOSITION DE POLYURÉTHANNE THERMOPLASTIQUE IGNIFUGE

(43) Date of publication of application: 15.06.2022
(73) Proprietor: Daihachi Chemical Industry Co., Ltd., Osaka-shi, Osaka 541-0053 (JP)
(72) Inventor: ZUCCHELLI, Ugo, 20020 Arese (MI) (IT); MORONE, Vincenza, 20020 Arese (MI) (IT); TSUJI, Hiroshi, Higashiosaka-shi, Osaka 577-0056 (JP)
(74) Representative: Uexküll & Stolberg
(86) International application number: PCT/JP2019/031769
(87) International publication number: WO 2021/028999

(56) References cited:
- WO-A1-2014/038595
- WO-A1-2019/093066
- CN-A- 103 224 531
- CN-A- 104 861 302
- CN-A- 105 086 287
- JP-A- H0 748 509
- KR-A- 20070 055 886
- US-B2- 9 708 538

## Description

### Technical Field

The present invention is related to a thermoplastic polyurethane resin composition that has excellent flame retardance and a flame retardant composition for thermoplastic polyurethane resin.

### Background Art

A polyurethane resin is a material based on the reaction of polyisocyanates and polyols, with very different performances depending on the chemical structure and ratio of combination of the polyols and isocyanates. As a general distinction, polyurethanes are divided into thermosetting polyurethanes (TSU) and thermoplastic polyurethanes (TPU), depending on the method of forming. The majority of TPU are manufactured by polymerization to obtain a pellet form that can be further extruded or injected, where the TSU is produced by mixing liquid prepolymer into a molding machine and heating for curing for a specific time. The present invention relates to a flame retardant composition for TPU which can be used in injection molding or extrusion. Properties of TPU are influenced by the polyols used, which can be polyester, polyether or polycarbonate type. Polyester TPU and polyether TPU are the most common due to the raw material innovation and market needs. Flame retardants based on polyether TPU have been used for wire and cable jacketing and primary insulation because of their flexibility and hydrolytic stability. For these products, it is necessary to add flame retardants to meet stringent flame requirements. Thermoplastic polyurethane when subjected to a flame or a heat source decomposes into a low molecular weight molten material that easily ignites and drip with burning drops.

To demonstrate the effectiveness of the flame retardant, an important property is the UL-94 test "Flammability of plastic materials for parts in device and appliances" that evaluates the capacity of extinction and dripping behavior of the thermoplastic polyurethane composition. The possible classes are V0, V1 and V2. To achieve the best class V0, a sample burns for a maximum of 10 seconds after ignition and does not drip any flaming drops that ignite the cotton placed under the test specimen. For V2 rating, the flaming drops are permitted.

Another parameter to evaluate the flame retardance of a TPU compound is the Limiting Oxygen Index (LOI). The LOI, according to ASTM D2863 "Standard Test Method for Measuring the Minimum Oxygen Concentration to Support Candle-Like Combustion of Plastics", is the minimum percentage of oxygen allowing a sample to sustain combustion under specified conditions in a candle-like configuration. A high value of LOI means a high level of flame retardance. Pure TPU resins have a LOI value in the range of 21-23. Flame retarded (FR) TPU grades show LOI values higher than 24.

For wire and cable applications, the TPU composition should have a Shore A durometer of from 78 to 98, preferably from 85 to 95. TPU compositions are soft. Therefore, it is more difficult to achieve UL-94 V0 and high LOI on soft TPU.

The above-mentioned FR TPU with LOI higher than 24 and a UL-94 V0 rating are mostly capable of passing the flame test on cables like for instance IEC 60332-1 "Vertical Flame test" or UL VW-1 (UL1581 Sec. 1080 "Standard for Vertical Flame Test") or CSA FT-1 (CSA C22.2 No. 0.3-92 "Test Methods for Electrical Wires and Cables").

Halogen compounds alone or in combination with metal oxides are commonly used to make flame retarded polyurethane thermoplastic polymer.

Halogens however give problems of smoke density and corrosion. Several studies were carried out to find halogen free compositions able to pass the stringent flame tests and showing the adequate electrical and mechanical properties required.

Many halogen-free TPU formulations flame retarded with nitrogen-based compounds or phosphorus-based compounds, polyhydric compounds, fillers particularly talc or a mixture thereof are known in the art.

A new family of compounds that contain a covalent bonding between nitrogen and phosphorous, phosphonamidate and phosphoramidate compounds, are an option.

Examples of phosphonamidate compounds are the amino substituted DOPO (9,10-di-hydro-9-oxa-phosphaphenthren-10-oxide) derivatives. They have good flame retardant properties for various thermoplastic polymers and in particular for polyurethane foam as reported in WO2013/020696.

Many applications of phosphoramidate compounds in engineering thermoplastic are known in the art, see for instance: WO2003/048247 in Polyesters, US5973041 and US6221939 in PC, PPE, polystyrenes, EP1067153 in PC/ABS.

According to WO2009/153034 and EP2481744, alkyl or aryl phosphoramidate compounds are used to flame retard cotton and viscose fiber and film. CN105086287A and CN104861302A describe flame-retardant polyvinyl chloride boards and flame-retardant polypropylene foaming sheets comprising a bromine-nitrogen composite flame retardant and further comprising a phosphoramidate and a triazine compound. WO2019093066A1 describes a flame retardant composition comprising a phosphoramidate compound and a triazine-based compound.

Examples of polyurethane (PU) foam formulations flame retarded with cyclic phosphoramide ester compound in combination with other flame retardant additives such as melamine are reported in US2010/0063169. Phosphoramidate compounds having a specific structures with good flame retardance for PU foam or PU elastomer are disclosed in US9988510. Moreover, examples of flame retarded aqueous resin composition for coating and back-coating of textile or for polyurethane resin composition of synthetic leather with Phosphoramidate compounds having a specific structures are reported in US10000625.

Polyurethane thermoplastic resin compositions having only melamine cyanurate as flame retardant are disclosed in WO2003/066723.

The US5837760 patent claims a self-extinguishing flame retardant TPU with one or more organic phosphate or phosphonate mixed with melamine derivate. Flame retardant TPU compositions comprising an organophosphate and a melamine derivative are also described in JPH0748509A, KR20070055886A and WO2014038595A1.

According to WO2009/086035, the flame retardance of TPU was achieved by a mixture of phosphinate, dipentaerythritol, melamine derivate and talc.

In the WO2014/179092 TPU formulations with a mixture of inorganic aluminum phosphinate, a melamine derivative, a polyhydric alcohol and one or more fillers comprising talc are disclosed.

US2018/0273727 discloses a TPU composition comprising an inorganic phosphorus based flame retardant and further comprise expandable graphite, melamine or derivatives of organic phosphorus flame retardant. US9708538B2 describes flame retardant compositions comprising a triazine-intercalated metal phosphate and at least one other flame retardant component.

All the above said patents claim for total flame retardant additive contents from a minimum of 25% or preferably a minimum of 30% by mass.

Despite state of the art solutions for halogen free TPU shows satisfactory flame retardant performances, the physical and mechanical properties and processing behavior of the said TPU are negatively influenced by the relatively high additive content.

Therefore, there is need for novel and more efficient flame retardant solutions requiring lower additive level.

### Citation List

### Patent Literature

[PTL 1] WO2013/020696
[PTL 2] WO2003/048247
[PTL 3] US5973041
[PTL 4] US6221939
[PTL 5] EP1067153
[PTL 6] WO2009/153034
[PTL 7] EP2481744
[PTL 8] US9988510
[PTL 9] US10000625
[PTL 10] WO2003/066723
[PTL 11] US5837760
[PTL 12] WO2009/086035
[PTL 13] WO2014/179092
[PTL 14] US2018/0273727

### Summary of Invention

### Problems to be solved by the invention

The main object of the present invention is to provide a thermoplastic polyurethane resin composition that has flame retardance and a flame retardant composition for a thermoplastic polyuretane resin.

### Means for Solving the Problem

The inventors intensively studied to solve the above-described problem, and consequently found a thermoplastic polyurethane resin composition that has excellent flame retardance and a flame retardant composition for a thermoplastic polyurethane resin.

For example, the present invention provides flame retardant thermoplastic polyurethane resin compositions, and the like described below.

### (Item 1)

A flame retardant thermoplastic polyurethane composition comprising:
a thermoplastic polyurethane resin,
a flame retardant composition comprising a phosphoramidate compound and a triazine-based compound and
an antioxidant,
wherein the phosphoramidate compound is represented by the general formula (I): 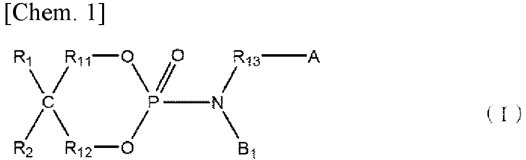
wherein R₁ and R₂ are each independently hydrogen atom or an alkyl group in which the number of carbon atoms is 1 to 3, R₁₁ and R₁₂ are each independently an alkylene group in which the number of carbon atoms is 1 to 3, R₁₃ is an alkylene group in which the number of carbon atoms is 1 to 6, B₁ is a hydrogen atom or an alkyl group in which the number of carbon atoms is 1 to 6, and A is a hydrogen atom or an organic group represented by general formula (II): 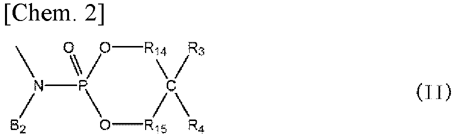
wherein R₃ and R₄ are each independently hydrogen atom or an alkyl group in which the number of carbon atoms is 1 to 3, R₁₄ and R₁₅ are each independently an alkylene group in which the number of carbon atoms is 1 to 3, and B₂ is a hydrogen atom or an alkyl group in which the number of carbon atoms is 1 to 6; and
wherein when A is a hydrogen atom and B₁ is an alkyl group in which the number of carbon atoms is 1 to 6, then B₁ and R₁₃-A may be bound to form a nitrogen-containing heterocycle with the nitrogen atom in the general formula (I), and
when A is an organic group represented by the general formula (II), B₂ is an alkyl group in which the number of carbon atoms is 1 to 6, and B₁ is an alkyl group in which the number of carbon atoms is 1 to 6, then B₁ and B₂ may be bound to form a nitrogen-containing heterocycle with the nitrogen atom in the general formula (I), the nitrogen atom in the general formula (II) and R₁₃, and
wherein the triazine-based compound is a compound having a 1,3,5-triazine structure or a 1,3,5-triazine fused ring structure, or a salt thereof.

### (Item 2)

The flame retardant thermoplastic polyurethane composition according to item 1, wherein the triazine-based compound is a melamine, a condensate of melamine or a salt thereof.

### (Item 3)

The flame retardant thermoplastic polyurethane composition according to item 1 or 2, wherein the triazine-based compound is a salt of melamine.

### (Item 4)

The flame retardant thermoplastic polyurethane composition according to any one of items 1 to 3, wherein the triazine-based compound is a cyanurate salt of melamine.

### (Item 5)

The flame retardant thermoplastic polyurethane composition according to any one of items 1 to 4, wherein in the general formula (I), R₁ and R₂ are methyl groups, and R₁₁ and R₁₂ are methylene groups.

### (Item 6)

The flame retardant thermoplastic polyurethane composition according to any one of items 1 to 5, wherein in the general formula (I), A is an organic group represented by the general formula (II), R₃ and R₄ are methyl groups, and R₁₄ and R₁₅ are methylene groups.

### (Item 7)

The flame retardant thermoplastic polyurethane composition according to item 6, wherein in the general formula (I), R₁₃ is an alkylene group in which the number of carbon atoms is 1 to 2.

### (Item 8)

The flame retardant thermoplastic polyurethane composition according to item 6 or 7, wherein in the general formula (I), B₁ and B₂ are hydrogen atoms.

### (Item 9)

The flame retardant thermoplastic polyurethane composition according to any one of items 6 to 8, wherein said phosphoramidate compound is represented by the formula (4):

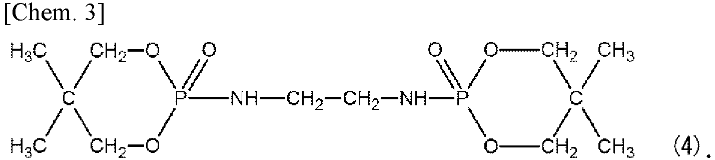

### (Item 10)

The flame retardant thermoplastic polyurethane composition according to any one of items 1 to 9, wherein the mass ratio of "the phosphoramidate compound : triazine-based compound" is 1:9 to 9:1.

### (Item 11)

The flame retardant thermoplastic polyurethane composition according to any one of items 1 to 10, wherein the thermoplastic polyurethane resin comprises polyether polyurethane, polyester polyurethane or polycarbonate polyurethane.

### (Item 12)

The flame retardant thermoplastic polyurethane composition according to any one of items 1 to 11, wherein the total amount of the phosphoramidate compound and the triazine-based compound in the flame retardant thermoplastic polyurethane composition is 7 to 50% by mass.

### (Item 13)

The flame retardant thermoplastic polyurethane composition according to any one of items 1 to 12, wherein the antioxidant is a hindered phenol compound, a phosphite compound or a mixture thereof.

### (Item 14)

The flame retardant thermoplastic polyurethane composition according to item 13, wherein the antioxidant is a mixture of a hindered phenol heat stabilizer and a phosphite process stabilizer.

### (Item 15)

The flame retardant thermoplastic polyurethane composition according to any one of items 1 to 14, further comprising another additive.

### Effects of Invention

The present invention can provide a thermoplastic polyurethane resin composition having excellent flame retardance.

In one embodiment of the present invention, an object of the present invention is to provide a flame retardant additive efficient at low concentration, based on a mixture of a phosphoramidate compound and a triazine-based compound such as melamine cyanurate, or melamine, or a condensation product of melamine.

In one embodiment of the present invention, efficient flame retardant system for TPU can achieve a flame retardant thermoplastic polyurethane composition having the following performances:
a) UL-94 V0 rating at a thickness of 1.6 mm, and
b) a LOI value higher than 24.

According to one embodiment of the present invention, low concentration of flame retardant additive means below 25% by mass, or more preferably below 15% by mass, with respect to the total composition.

In one embodiment of the present invention, a suitable TPU may include a polyether TPU, a polyester TPU, a polycarbonate TPU or a combination thereof. Particularly preferred are polyether TPU. They can be formed in a polymerization step and added to an extruder or the reactants can be added together at substantially the same time to a heated extruder. A urethane catalyst can be added to improve yield or decrease temperature and time of reaction. It is important to note than the quantity of flame retardant according to the present invention may change depending on the hardness and type of the TPU.

A preferred phosphoramidate compound is a bi-cyclic phosphoramide. In one embodiment, particle size distribution is suitable for cable extrusion molding materials having a mean particle size diameter of 0.5 micrometers to 60 micrometers, more preferably 1 micrometer to 40 micrometers. The particle size distribution curve may be monomodal, bimodal or multimodal.

Another object of the present invention is a flame retardant mixture composed by a dry blend of a phosphoramidate compound and a triazine-based compound such as melamine cyanurate, melamine, melamine condensation product, or a mixture thereof.

The preferred triazine-based compound is melamine cyanurate having melamine free content (<0.1% melamine) and cyanuric acid free content (<0.15% cyanuric acid). In one embodiment, particle size distribution is suitable for cable extrusion molding materials having a mean particle size diameter of 0.5 micrometers to 60 micrometers, more preferably 5 micrometers to 40 micrometers. The particle size distribution curve may be monomodal, bimodal or multimodal.

One object of the present invention is a concentrate or masterbatch in a pellet form for flame retardant extrusion molding materials, injection molding or extrusion items. In one embodiment, a masterbatch is composed by a TPU polymer, a mixture of a phosphoramidate compound, a melamine derivative compound and other additives such as pigment, stabilizers and fillers. In one embodiment, the total concentration of additives ranges from 30% by mass to 70% by mass.

Still another object of the present invention is a molding material in a pellet form for flame retardant injection molding or extrusion items. The molding material may be composed of a TPU polymer, and a mixture of a phosphoramidate compound, a triazine-based compound and other additives such as pigment, stabilizers and fillers. In one embodiment, the total concentration of additives ranges from 7% by mass to 50% by mass.

A further object of the present invention is a flame retardant polymer composition or a masterbatch in a pellet form used for primary insulation or jacketing wire and cables.

### Embodiments for Carrying Out the Invention

In one embodiment, the present invention provides a flame retardant thermoplastic polyurethane composition comprising:
A) a thermoplastic polyurethane resin;
B) a phosphoramidate compound;
C) a triazine-based compound;
D) one or more antioxidant; and
E) optionally other additives like processing aid, pigments, one or more fillers including talc.

In one embodiment, the total percentage of the components A) to E) is 100% in mass.

An amount of a thermoplastic polyurethane resin (component (A)) in the flame retardant thermoplastic polyurethane composition is not particularly limited. For example, an amount of the thermoplastic polyurethane resin (component (A)) in the flame retardant thermoplastic polyurethane composition may be preferably 40% by mass or more, more preferably 50% by mass or more, further preferably 60% by mass or more, and particularly preferably 70% by mass or more. The amount of component (A) in the flame retardant thermoplastic polyurethane composition may be preferably 98% by mass or less, more preferably 95% by mass or less, and further preferably 90% by mass or less. If necessary, the amount can be 80% by mass or less, 70% by mass or less, 60% by mass or less, or 50% by mass or less.

An amount of the flame retardant mixture, composed by a phosphoramidate compound (component (B)) and triazine-based compound (component (C)), in the flame retardant thermoplastic polyurethane composition is not particularly limited. In one embodiment, the sum of an amount of component (B) and an amount of component (C) in the flame retardant thermoplastic polyurethane composition is preferably 5% by mass or more, more preferably 7% by mass or more, and further preferably 10% by mass or more. The sum of an amount of component (B) and an amount of component (C) in the flame retardant thermoplastic polyurethane composition is preferably 50% by mass or less, more preferably 40% by mass or less, and further preferably 35 % by mass or less, and particularly preferably 30% by mass or less. If necessary, the amount can be 25% by mass or less, 20% by mass or less, or 15% by mass or less.

In one embodiment, a mass ratio of an amount of component (B) and an amount of component (C) (component (B) : component (C)) is preferably 9:1 to 1:9, more preferably 6:1 to 1:6, further preferably 4:1 to 1:4, and particularly preferably 3:1 to 1:3.

### (Thermoplastic polyurethane resin)

Hereinbelow, a thermoplastic polyurethane resin used in the flame retardant thermoplastic polyurethane composition of the present invention is described in detail.

In the flame retardant thermoplastic polyurethane composition of the present invention, any known thermoplastic polyurethane (TPU) resin can be used.

A thermoplastic polyurethane resin can be produced by conducting a heretofore known polymerization reaction between polyol and isocyanate. The thermoplastic polyurethane resin may be also available for commercial products.

The thermoplastic polyurethane resin can be polyether polyurethane, can be polyester polyurethane and can be polycarbonate polyurethane.

### (Polyol)

As a polyol used in a thermoplastic polyurethane resin, various polyols known as polyols for a polyurethane resin can be used.

Specifically, polyether polyol, polyester polyol, polycarbonate diol, and the like can be used. The polyol is not particularly limited as long as it is usually used as raw material for polyurethane formation.

Among the above-described polyol, preferable examples of polyether polyol include, for example, polyether polyol obtained by adding, an alkylene oxide such as ethylene oxide, propylene oxide, or the like to a skeleton molecule. The method of addition can be adding the alkyleneoxide to the skeleton molecule like a random copolymerization and may be adding the alkyleneoxide to the skeleton molecule like a block copolymerization.

A polyester polyol is a compound having hydroxyl groups at the ends that is obtained by polycondensation of a multi-functional carboxylic acid and a multi-functional hydroxy compound. It is possible to use a polyester polyol having preferably a number average molecular weight of about 500 to 10000, more preferably a number average molecular weight of about 1000 to 5000.

As a polyol for producing a polycarbonate polyurethane, a polycarbonate diol and the like can be used.

With regard to the above-described polyol components, one type thereof may be used alone or two or more types thereof may be used in combination in accordance with characteristics required for polyurethane products.

### (Polyisocyanate)

A polyisocyanate that is reacted with the above-described polyol is a compound having a plurality of isocyanate groups. In the thermoplastic polyurethane composition of the present invention, any conventionally known polyisocyanate which has been used for a thermopolastic polyurethane resin can be used as the polyisocyanate. As such a polyisocyanate compound, for example, an aromatic polyisocyanate, an aliphatic polyisocyanate, an alicyclic polyisocyanate, and the like can be used. Further, modified polyisocyanates, which are obtained by modifying these polyisocyanates, and the like can be used. In addition, if necessary, a mixture of two or more types of polyisocyanates may be used.

### (Phosphoramidate compound)

A phosphoramidate compound (component (B)) which is used in the present invention is represented by general formula (I): 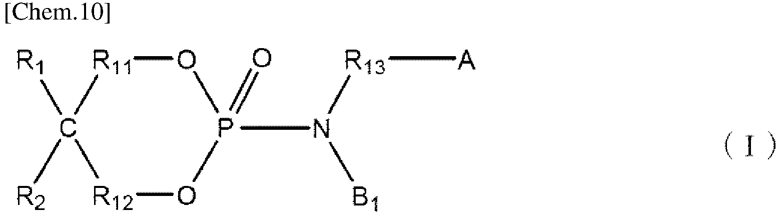
wherein R₁ and R₂ are each independently a hydrogen atom or an alkyl group in which the number of carbon atoms is 1 to 3, R₁₁ and R₁₂ are each independently an alkylene group in which the number of carbon atoms is 1 to 3, R₁₃ is an alkylene group in which the number of carbon atoms is 1 to 6, B₁ is a hydrogen atom or an alkyl group in which the number of carbon atoms is 1 to 6, and A is a hydrogen atom or an organic group represented by general formula (II): 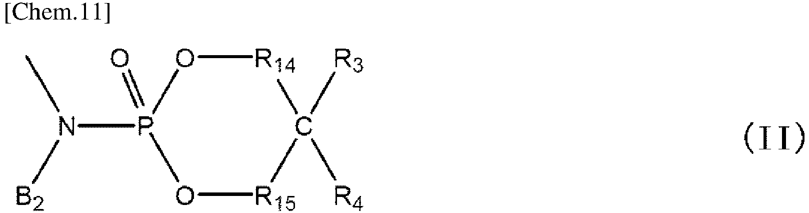
wherein R₃ and R₄ are each independently a hydrogen atom or an alkyl group in which the number of carbon atoms is 1 to 3, R₁₄ and R₁₅ are each independently an alkylene group in which the number of carbon atoms is 1 to 3, B₂ is a hydrogen atom or an alkyl group in which the number of carbon atoms is 1 to 6; and
wherein when A is a hydrogen atom, then B₁ is an alkyl group in which the number of carbon atoms is 1 to 6, and B₁ and R₁₃-A may be bound to form a nitrogen-containing heterocycle with the nitrogen atom in the general formula (I), and
when A is an organic group represented by the general formula (II), B₂ is an alkyl group in which the number of carbon atoms is 1 to 6, and B₁ is an alkyl group in which the number of carbon atoms is 1 to 6, then B₁ and B₂ may be bound to form a nitrogen-containing heterocycle with the nitrogen atom in the general formula (I), the nitrogen atom in the general formula (II) and R₁₃.

It should be noted that an "alkyl group" in the present specification refers to a monovalent group resulting from loss of one hydrogen atom from a chain or cyclic aliphatic hydrocarbon (alkane). In the cases of chain alkyl, the alkyl group is generally represented by CₖH₂ₖ₊₁- (wherein k is a positive integer). A chain alkyl group may be a straight chain or a branched chain. A cyclic alkyl group may consist of a cyclic structure, or may have a structure in which a chain alkyl group is further linked to the cyclic structure. An "alkylene group" in the present specification refers to a divalent group resulting from loss of one more hydrogen atom from an alkyl group. For example, an "ethylene group" refers to a divalent group resulting from loss of one more hydrogen atom from an ethyl group.

Examples of alkyl groups in which the number of carbon atoms is 1 to 3 in the general formulas (I) and (II) include a methyl group, an ethyl group, a n-propyl group, and an isopropyl group. Of these, a methyl group and an ethyl group are preferable and a methyl group is particularly preferable in terms of flame retardance. Examples of alkylene groups in which the number of carbon atoms is 1 to 3 include a methylene group, an ethylene group, a n-propylene group, and an isopropylene group. Of these, a methylene group and an ethylene group are preferable and a methylene group is particularly preferable in terms of flame retardance.

Examples of alkyl groups in which the number of carbon atoms is 1 to 6 include a methyl group, an ethyl group, a n-propyl group, an isopropyl group, a n-butyl group, an isobutyl group, a tert-butyl group, a n-pentyl group, a n-hexyl group, and the like. Of these, a methyl group and an ethyl group are preferable and a methyl group is particularly preferable in terms of flame retardance. Examples of alkylene groups in which the number of carbon atoms is 1 to 6 include a methylene group, an ethylene group, a n-propylene group and an isopropylene group, a n-butylene group, an isobutylene group, a tert-butylene group, a n-pentylene group, a n-hexylene group, and the like. Of these, an alkylene group in which the number of carbon atoms is 4 or less is preferable and a methylene group and an ethylene group are particularly preferable in terms of flame retardance.

When A is a hydrogen atom, an aliphatic nitrogen-containing heterocycle formed by binding of B₁ and R₁₃ is a 3- to 13-membered, preferably 4- to 8-membered, more preferably 6-membered heterocycle containing one nitrogen.

A nitrogen-containing heterocycle that may be formed when A is an organic group represented by the general formula (II) is a 5-membered to 20-membered, preferably 5-membered to 8-membered, more preferably 6-membered or 7-membered, further preferably 6-membered heterocycle containing two nitrogens.

Examples of phosphoramidate compounds represented by the general formula (I) include:
a compound represented by general formula (III) where B₁ is an alkyl group in which the number of carbon atoms is 1 to 6, A is a hydrogen atom, B₁ and R₁₃-A are bound to form a nitrogen-containing heterocycle with the nitrogen atom in the general formula (I): 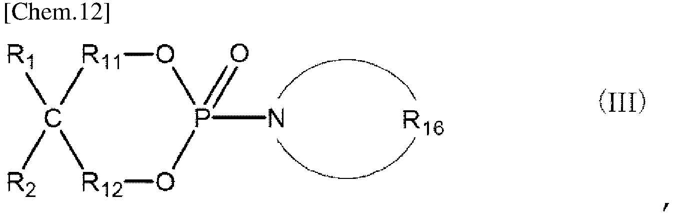
wherein R₁, R₂, R₁₁, and R₁₂ are the same as the definitions in the general formula (I), and R₁₆ is an alkylene group in which the number of carbon atoms is 2 to 12;
a compound represented by general formula (IV) where A is an organic group represented by the general formula (II), B₁ and B₂ are each independently a hydrogen atom or an alkyl group in which the number of carbon atoms is 1 to 6: 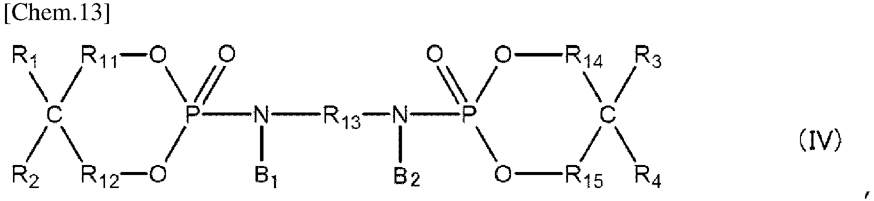
wherein R₁, R₂, R₁₁, R₁₂, and R₁₃ are the same as the definitions in the general formula (I), R₃, R₄, R₁₄, and R₁₅ are the same as the definitions in the general formula (II), and B ₁ and B₂ are each independently a hydrogen atom or an alkyl group in which the number of carbon atoms is 1 to 6;
a compound represented by general formula (V) where B₁ is an alkyl group in which the number of carbon atoms is 1 to 6, A is an organic group represented by the general formula (II), B₂ is an alkyl group in which the number of carbon atoms is 1 to 6, B₁ and B₂ are bound to form a nitrogen-containing heterocycle with the nitrogen atom in the general formula (I), the nitrogen atom in the general formula (II) and R₁₃: 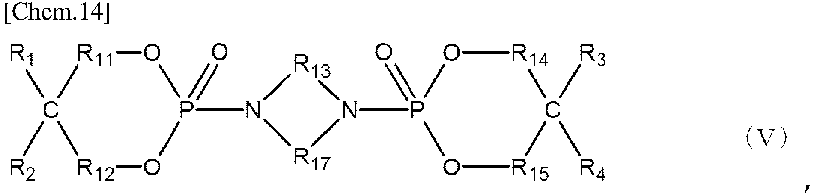
wherein R₁, R₂, R₁₁, R₁₂, and R₁₃ are the same as the definitions in relation to the general formula (I), R₃, R₄, R₁₄, and R₁₅ are the same as the definitions in relation to the general formula (II), and R₁₇ is an alkylene group in which the number of carbon atoms is 2 to 12; and the like.

Examples of compounds represented by the general formula (III) include compounds of the following formulas (1) to (3) and the like.

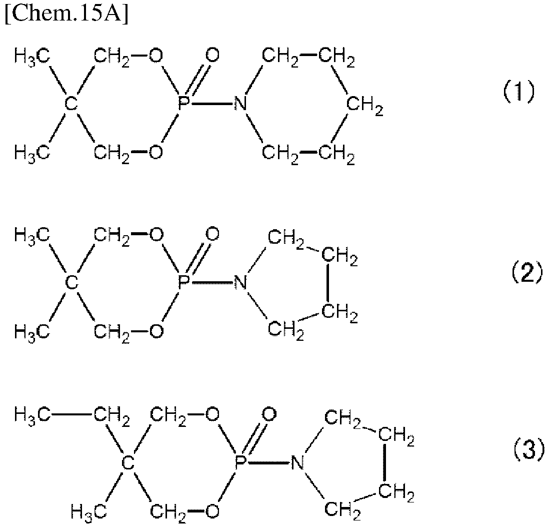

Examples of compounds represented by the general formula (IV) include compounds of the following formulas (4) to (9) and the like.

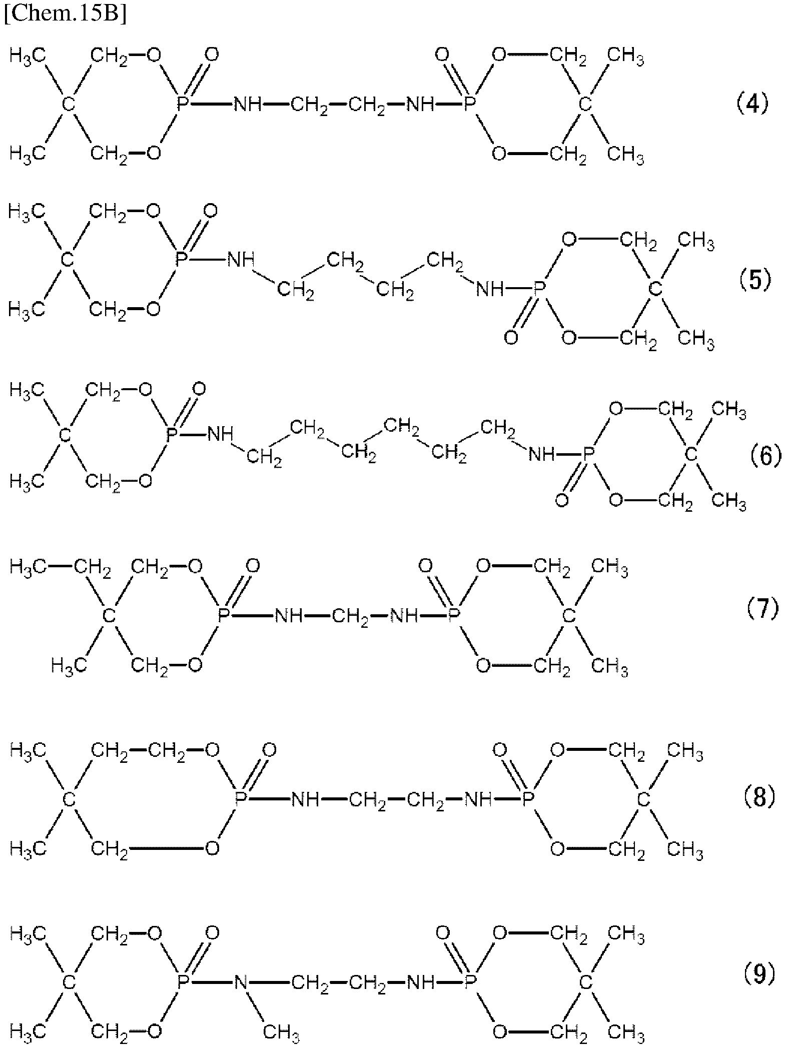

Examples of compounds represented by the general formula (V) include compounds of the following formulas (10) to (14) and the like.

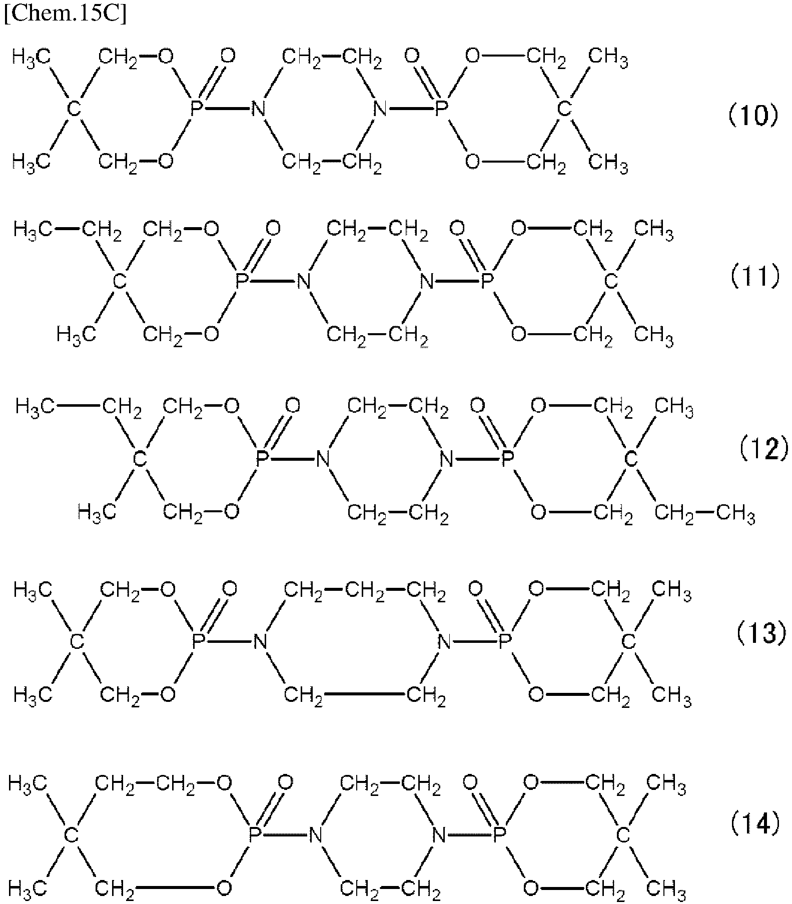

Among the phosphoramidate compounds represented by the general formula (I), a compound in which R₁ and R₂ are methyl groups and R₁₁ and R₁₂ are methylene groups is preferable from the viewpoint of flame retardance.

A in the general formula (I) is preferably an organic group represented by the general formula (II). From the viewpoint of flame retardance, it is preferable that R₃ and R₄ are methyl groups and R₁₄ and R₁₅ are methylene groups.

Regarding R₁₃ of the general formula (I), the number of carbon atoms is 1 to 6. From the viewpoint of flame retardance, the number of carbon atoms is preferably 1 to 5, more preferably 1 to 4, and further preferably 1 to 2.

When A of the general formula (I) is an organic group represented by the general formula (II), if B₁ of the general formula (I) and B₂ of the general formula (II) are not bound, B₁ and B₂ are preferably both hydrogen atom from the viewpoint of flame retardance. If B₁ and B₂ are bound, it is preferable that B₁ and B₂ are taken together to form an ethylene group or a propylene group. It is more preferable that B₁ and B₂ are taken together to form an ethylene group. In addition, it is preferable that they are bound to form a 5-membered to 8-membered nitrogen-containing heterocycle with the nitrogen atom in the general formula (I), the nitrogen atom in the general formula (II) and R₁₃, more preferably to form a 6-membered to 7-membered nitrogen-containing heterocycle, and further preferably to form a 6-membered nitrogen-containing heterocycle.

When A in the general formula (I) is an organic group represented by the general formula (II), it is preferable that R₁ and R₂ as well as R₁₁ and R₁₂ of the general formula (I) are the same as R₃ and R₄ as well as R₁₄ and R₁₅ of the general formula (II), respectively. That is, it is preferable that two phosphorus-containing ring structures are the same. If the two phosphorus-containing ring structures are the same, it has the advantage of being easy to synthesize such a compound.

Among the compounds of the above-described formulas (1) to (14), examples of preferable compounds include compounds of formulas (4) to (7). Compounds of the formulas (4) and (5) are more preferable and the compound of the formula (4) is further preferable.

### (Triazine-based compound)

The triazine-based compound (component (C)) which is used in the present invention is a nitrogen-containing compound having a 1,3,5-triazine structure or a 1,3,5-triazine fused ring structure.

The 1,3,5-triazine structure is a 6-membered ring structure consisting of 3 carbon atoms and 3 nitrogen atoms.

In the present specification, the 1,3,5-triazine fused ring means a fused ring formed by fusing a plurality of 1,3,5-triazine rings. In the present specification, a 1,3,5-triazine fused ring structure means a structure of a fused ring formed by fusing a plurality of 1,3,5-triazine rings.

The compound of component (C) may be a compound having one 1,3,5-triazine structure, or may be a compound having a plurality of 1,3,5-triazine structures. Specifically, the compound having one 1,3,5-triazine structure is a compound represented by the following general formula (C1).

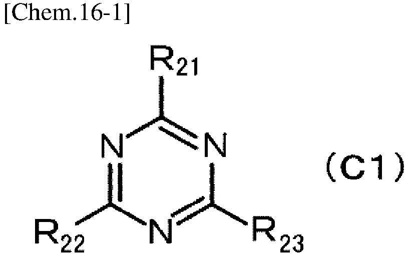

In the above-described general formula (C1), R₂₁, R₂₂ and R₂₃ are each independently a hydrogen atom or an optional monovalent substituent. Preferably, at least one of R₂₁, R₂₂ and R₂₃ is other than a hydrogen atom. More preferably, at least one of R₂₁, R₂₂ and R₂₃ is an amino group or a substituted amino group. Further preferably, R₂₁, R₂₂ and R₂₃ are each independently an amino group or a substituted amino group. Particularly preferably, each of R₂₁, R₂₂ and R₂₃ is an amino group. Melamine is the preferred option.

Further, the above-described optional monovalent substituent other than the amino group and the substituted amino group may be, for exmaple, a hydroxy group, a methyl group, an ethyl group, a n-propyl group, an isopropyl group, a n-butyl group, an isobutyl group or a tert-butyl group.

The compound having the structure of the above-described general formula (C1) may be a salt. For example, a salt of melamine and cyanuric acid can be used. As a type of salt, for example, an acid addition salt in which an acidic compound is added to a basic nitrogen in the compound (for example, melamine phosphate, melamine pyrophosphate (for example, a salt in which the molar ratio of "pyrophosphoric acid : melamine" is 1:1) or melamine cyanurate), and the like are included. As the acid addition salt, a phosphate salt, a pyrophosphate salt (for example, a salt in which the molar ratio of "pyrophosphoric acid : a compound having a basic nitrogen" is 1:1) or a cyanuric acid is preferable. More preferably, the acid salt is a cyanurate salt.

In the present specification, a cyanuric salt refers to a salt of cyanuric acid and a nitrogen-containing compound of component (C), and the molar ratio of "cyanuric acid : a nitrogen-containing compound" is not particularly limited. That is, it may be a salt in which only one molecule of a nitrogen-containing compound is bound to one cyanuric acid molecule, or it may be a salt in which a plurality of nitrogen-containing compound molecules are bound to one cyanuric acid molecule. Preferably, the molar ratio of "cyanuric acid : a nitrogen-containing compound" is 1:1.

In the present specification, a melamine cyanurate refers to a salt of cyanuric acid and melamine, and the molar ratio of "cyanuric acid : melamine" is not particularly limited. That is, it may be a salt in which only one molecule of melamine is bound to one molecule of cyanuric acid, or it may be a salt in which plural melamine molecules are bound to one molecule of cyanuric acid. Preferably, the molar ratio of "cyanuric acid : melamine" is 1:1.

The compound having a plurality of 1,3,5-triazine structures may be a compound in which at least one of R₂₁ to R₂₃ in the above-described general formula (C1) has a 1,3,5-triazine structure. That is, it may be a compound having a structure in which a plurality of 1,3,5-triazine structures are connected (for example, melam).

The 1,3,5-triazine fused ring is formed, for example, by deammonia condensation of melamine. Examples of the compound having a 1,3,5-triazine fused ring structure include, for example, a compound represented by the following general formula (C2).

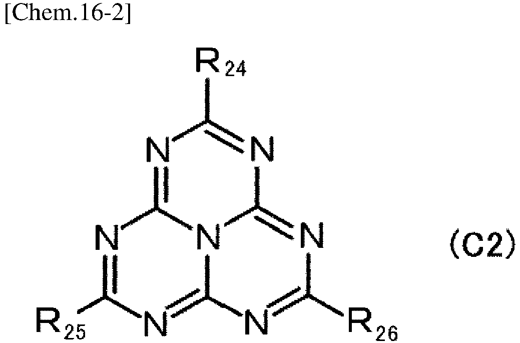

In the above-described general formula (C2), R₂₄, R₂₅ and R₂₆ may be independently a hydrogen atom or an optional monovalent substituent. Preferably, at least one of R₂₄, R ₂₅ and R₂₆ is other than a hydrogen atom. More preferably, at least one of R₂₄, R₂₅ and R ₂₆ is an amino group or a substituted amino group. More preferably, R₂₄, R₂₅ and R₂₆ are each independently an amino group or a substituted amino group. Particularly preferably, each of R₂₄, R₂₅ and R₂₆ is an amino group (for example, melem).

Further, the above-described optional monovalent substituent other than the amino group and the substituted amino group may be, for example, a hydroxy group, a methyl group, an ethyl group, a n-propyl group, an isopropyl group, a n-butyl group, an isobutyl group or a tert-butyl group.

The compound having the structure of the above-described general formula (C2) may be a salt. For example, salts of compounds having a structure in which a plurality of melamine molecules are fused can be used. Types of salts include, for example, acid addition salts in which an acidic compound is added to basic nitrogen in the compound (for example, melem phosphate, melem pyrophosphate or melem cyanurate). As the acid addition salt, a phosphate salt, a pyrophosphate salt or a cyanurate salt is preferable, and a cyanurate salt is more preferable.

Specific examples of the nitrogen-containing compound having a 1,3,5-triazine fused ring structure include, for example, those currently commercially available such as melam (CAS 3576-88-3), melem (CAS 1502-47-2), melone (CAS 32518-77-7), pure or in mixtures and salts thereof.

Preferable specific examples of the nitrogen-containing compound of the component (C) include melamine, melam, melem, melone, melamine phosphate, melam phosphate, melem phosphate, melone phosphate, melamine metaphosphate, melam metaphosphate, melem metaphosphate, melone metaphosphate, melamine pyrophosphate, melam pyrophosphate, melem pyrophosphate, melone pyrophosphate, melamine polyphosphate, melam polyphosphate, melem polyphosphate and melone polyphosphate, melamine cyanurete, melam cyanurate, melem cyanurate, melone cyanurate. Melamine phosphate, melamine pyrophosphate, melamine polyphosphate, melamine cyanurate, melam, melem, melone are more preferable as the examples of the nitrogen-containing compound of the component (C). Melamine phosphate, melamine pyrophosphate, melamine polyphosphate, melamine cyanurete are further preferable, and melamine cyanurate is particuraly preferable.

### (Antioxidants)

In the composition according to the present invention, an antioxidant may be contained in an amount effective to prevent oxidation. The antioxidant can be also used as a thermal stabilizer and a process stabilizer during extrusion. In this regard, examples of the antioxidant include hindered phenol compounds, sulfur compounds, phosphite compounds, amine-ketone compounds and amine compounds. Hindered phenol compounds and phosphite compounds are prefered as antioxidants.

The hindered phenol compounds as the antioxidants include monophenol compounds, bisphenol compounds and polyphenol compounds. Examples of the antioxidant are: monophenol compounds such as 2,6-di-tert-butyl-p-cresol, p-benzoquinone, methylhydroquinone, methyl-p-benzoquinone; bisphenol compounds such as 2,2'-methylenebis(4-methyl-6-tert-butylphenol), 2,2' -methylenebis(4-ethyl-6-tert-butylphenol), 4,4'-thiobis(3-methyl-6-tert-butylphenol), 4,4' -butylidenebis(3-methyl-6-tert-butylphenol), 3,9-bis[1,1-dimethyl-2-[beta-(3-tert-butyl-4-hydroxy-5-methylphenyl)propionyloxy]et hyl]2,4,8,10-tetraoxaspiro[5.5]undecane, 2,2'-dihydroxy-3,3'-di(α-methylcyclohexyl)-5,5'-dimethyldiphenylmethane; polyphenol compounds such as 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tetrakis-[methylene-3-(3',5'-di-tert-butyl-4'-hydroxyphenyl)propionate]methane, 1,3,5-tris(3',5'-di-tert-butyl-4'-hydroxybenzyl)-sec-triazine-2,4,6-(1H,3H,5H)trione; phosphite compounds such as triphenylphosphite, diphenyl isodecylphosphite, phenyl diisodecylphosphite, 4,4'-butylidene-bis(3-methyl-6-tert-butyl phenyl ditridecyl)phosphite, cyclic neopentanetetraylbis(octadecyl phosphite), tris(nonylphenyl)phosphite, tris(2,4-di-tert-butylphenyl)phosphite, cyclicneopentanetetrayl bis-(2,6-di-ter-butyl-4-methylphenyl)phosphite, 2,2-methylenebis(4,6-di-tert-butylphenyl)octylphosphite.

The antioxidant may be available for commercial prducts. Examples of antioxidants are: hindered phenol compounds such as Irganox L 1010, L 1076, L 109, L 115, L 135 (by BASF), Adekastab AO-20, AO-30, AO-40, AO-50, AO-80, AO-330 (by Adeka) and the like; phosphite compounds such as Irgaphos 168 (by BASF), Adekastab 135A, 260, 1178, 2112, HP-10, PEP-8, PEP-36, TPP (by Adeka) and the like.

The amount of the antioxidant used is preferably 0.1
parts by mass or more, and more preferably 0.2 parts by mass or more with respect to 100 parts by mass of the polyurethane resin composition. In addition, it is preferably 5 parts by mass or less, and more preferably 2 parts by mass or less.

With regard to the above-described antioxidants, one type thereof may be used alone or two or more types thereof may be used in combination in accordance with characteristics required for polyurethane products.

### (Other additives)

Other additives include processing aids, pigments, one or more fillers including talc. Further, additives other than the above-described additives may be optionally used. As such additives, for example, a cross-linking agent, an ultraviolet absorber, a hydrolysis inhibitor can be used. The types and amount to be added of these additives are not limited, and an additive generally used can be used in a range of the amount generally used. Specifically, for example, for each of these additives, the amount can be 0.01 parts by mass or more, 0.1 parts by mass or more or 1 part by mass or more with respect to 100 parts by mass of a resin. Further, the amount can be 20 parts by mass or less, and can be 10 parts by mass or less or 5 parts by mass or less with respect to 100 parts by mass of a resin.

### (Other flame retardants)

If necessary, a flame retardant other than the phosphoramidate compound and the triazine-based compound (hereinafter, referred to as "other flame retardant") can be further added to the composition of the present invention.

Such an other flame retardant may be an organic-type flame retardant, or may be an inorganic-type flame retardant. Examples of the organic-type flame retardant include a halogen-based flame retardant, a phosphate-based flame retardant, and the like. Examples of the inorganic-type flame retardant include antimony compounds, metal hydroxides, and the like. Specific examples of the metal hydroxides include, for example, aluminum hydroxide (alumina hydrate), magnesium hydroxide, and the like.

However, in order to take advantage of the flame retardant of the present invention, it is preferable that an amount of a flame retardant other than the phosphoramidate compound and the triazine-based compound to be used is small. For example, the amount of a flame retardant other than the phosphoramidate compound and the triazine-based compound to be used is preferably 20 parts by mass or less, more preferably 10 parts by mass or less, further preferably 5 parts by mass or less, even more preferably 1 part by mass or less with respect to 100 parts by mass of a resin. Further, for example, the amount of a flame retardant other than the phosphoramidate compound and the triazine-based compound to be used is preferably 100 parts by mass or less, more preferably 50 parts by mass or less, further preferably 20 parts by mass or less, and even more preferably 10 parts by mass or less with respect to 100 parts by mass of a sum of the phosphoramidate compound and the triazine-based compound.

In addition, in one preferable embodiment, for the amount of a flame retardant other than the phosphoramidate compound and the triazine-based compound to be used, the amount is preferably 5 parts by mass or less, 1 part by mass or less, 0.5 parts by mass or less, 0.1 parts by mass or less, 0.05 parts by mass or less, 0.01 parts by mass or less, 0.009 parts by mass or less, 0.008 parts by mass or less, 0.005 parts by mass or less, 0.001 parts by mass or less, 0.0005 parts by mass or less, or 0.0001 parts by mass or less with respect to 100 parts by mass of the resin.

In a particularly preferable embodiment, only a flame retardant composition consisting of the phosphoramidate compound and the triazine-based compound is used without mixing a flame retardant other than the phosphoramidate compound and the triazine-based compound.

A flame retardant of the present invention can achieve high flame retardance and a variety of performances required for general urethane resin products without mixing with a flame retardant other than the phosphoramidate compound and the triazine-based compound. Accordingly, if an intended urethane resin product is not a product for a special use, it is not necessary to mix a flame retardant other than the phosphoramidate compound and the triazine-based compound into a flame retardant of the present invention.

### (Preferable embodiments)

In one preferable embodiment, the present invention provides a flame retardant TPU composition comprising:
A) a thermoplastic polyurethane resin;
B) a phosphoramidate compound represented by the general formula (IV) or (V) 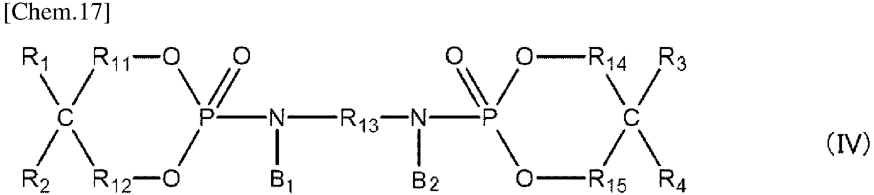 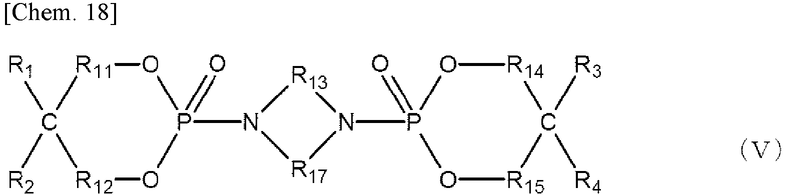 where
   - R₁, R₂, R₃ and R₄ are each independently a hydrogen atom or an alkyl group in which the number of carbon atoms is 1 to 3,
   - R₁₁, R₁₂, R₁₄ and R₁₅ are each independently an alkylene group in which the number of carbon atoms is 1 to 3,
   - R₆ and R₇ are each independently a hydrogen atom or an alkyl group in which the number of carbon atoms is 1 to 6,
   - R₁₃ is an alkylene group in which the number of carbon atoms is 1 to 6,
   - R₁₇ is an alkylene group in which the number of carbon atoms is 2 to 12;
C) a triazine-based compound (Melamine cyanurate is the preferred option (Melamine or condensation products of melamine, like those currently commercially available such as melam (CAS 3576-88-3), melem (CAS 1502-47-2), melone (CAS 32518-77-7) or salts thereof, pure or in mixtures are also a further option.);
D) one or more antioxidants such as phenolic antioxidants and phosphite antioxidants; and
E) optionally other additives such as pigments, fillers including talc.

In one embodiment, the total percentage of components A) to E) is 100% by mass.

In one embodiment, the ratio between the phosphoramidate compound and the triazine-based compound is preferably from 9:1 to 1:9, more preferably 6:1 to 1:6, further preferably 4:1 to 1:4, particularly preferably from 3:1 to 1:3.

In one embodiment, the phosphoramidate compound is preferably the aliphatic bi-cyclic phosphoramide of the following formula (4):

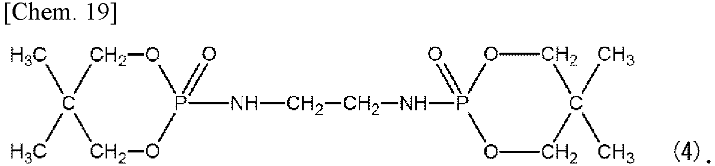

In one embodiment, a preferred triazine-based compound is melamine cyanurate or melamine or a condensation product of melamine such as melam, melem, melone or a mixture thereof.

A combination of a phosphoramidate compound and a triazine-based compound surprisingly improves the flame retardant properties of a polyether based TPU even if a concentration is below 25%, below 15% or below 10% by mass with respect to the total composition. The amount of the combination of a phosphoramidate compound and a triazine-based compound which is necessary in order to achieve the flame retardance is very low compared to the amount of a flame retardant in flame retardant thermoplastic compositions reported in the previous art, so it is very easy to control the processing conditions of molding with the TPU, and the deterioration of the molded articles in physical and mechanical properties is significantly low.

In one embodiment, the TPU composition according to the present invention may achieve the following flame retardant performances:
a) UL-94 V0 rating at a thickness of 1.6 mm, and
b) a LOI value higher than 24.

Surprisingly the inventors have found that a combination of a specific bi-cyclic phosphoramidate compound and a triazine-based compound (such as melamine cyanurate, melamine or condensation product of melamine) is a very efficient flame retardant ingredient in TPU.

According to the present invention, a flame retardant which is comprehensively very excellent as a flame retardant for a thermoplastic polyurethane resin is provided.

### Examples

Hereinafter, the present invention is described in further detail by showing Examples and Comparative Examples.

### (Compounding procedure)

All components in the formulations of the Examples and Comparative Examples were extruded in a 24 mm twin screw extruder with a temperature profile in the range of 180°C-190°C to produce pellets. The polymer pellets were introduced in the main hopper, and a dry blend of additives was introduced in the first side feeder. The extruded polymer pellets were dried in an oven at 90°C and thereafter sheets of different thickness were obtained by compression moulding. Sheets of 1.6 mm thickness were cut to obtain the specimens for UL-94 test and sheets of thickness 3 mm were cut to obtain the specimens suitable for LOI test procedure.

### (UL-94 test)

Flammability test was conducted and reported according to the UL-94 vertical test procedure. Two series of 5 specimens were conditioned for 24 hours at 23°C and 50% humidity. When the test results do not meet V0, V1 and V2, an NC classification was given.

### (LOI test)

The LOI tests were carried out according to the ASTM D2863 procedure. The LOI is the minimum percentage of oxygen in a mixture of oxygen and nitrogen which allows a sample to sustain combustion under specified conditions in a candle-like geometry.

### (INGREDIENTS)

Aromatic Polyether Based Thermoplastic Polyurethane resin, hardness 85A (Estane 58311 NAT 028) (hereinafter, referred to as "TPU1")
Cyclic phosphoramidate, an aliphatic bi-cyclic phosphoramidate compound of the aforementioned formula (4) (hereinafter, referred to as "ABCP"). ABCP was manufactured according to the procedure described in United States Patent Laid-open Application Publication No. 2016/0244582 in the paragraph [0173].
N,N 2-Bis (6-oxido-6H-dibenz [c,e][1,2] oxaphosphorin-6-yl)-1,2-ethanediamine (EDAB-DOPO, by Metadynea), a phosphorus nitrogen containing compound, (hereinafter, referred to as "EDAB-DOPO")
Melamine cyanurate (Melagard MC25, by Italmatch Chemicals), a nitrogen containing compound, (hereinafter, referred to as "MC")
Melamine (Melamine, by Sigma Aldrich), a nitrogen containing compound, (hereinafter, referred to as "MEL")
Melem (Delacal 420, by Delamin), a nitrogen containing compound, (hereinafter, referred to as "DEL")
Aluminium salt of di ethyl phosphinic acid (Exolit OP1240, by Clariant), a phosphorous containing compound (hereinafter, referred to as "OP1240")
Aluminium hypophosphite (Phoslite B85AX, by Italmatch Chemicals), a phosphorus containing compound (hereinafter, referred to as "B85AX")
3,9-dimethyl-2,4,8,10-tetraoxa-3,9-diphosphaspiro[5.5]undecane 3,9-dioxide (AFLAMMIT PCO900, by THOR), a phosphorus containing compound (hereinafter, referred to as "PCO900")
Melamine phosphate (Melagard MP, by Italmatch Chemicals), a phosphorus nitrogen containing compound, (hereinafter, referred to as "MP")
Ammonium polyphosphate (Exolit AP 422), a phosphorus containing compound (hereinafter, referred to as "APP")
Talc (STEAMIC T1 CA, by Imerys), hereafter "TALC"
Resorcinol bis(diphenyl phosphate) (Fyrolflex RDP, by ICL Industries), a phosphorus containing compound, (hereinafter, referred to as "RDP")
Blend of 20% by mass of Irganox 1010, a hindered phenol heat stabilizer, and 80% by mass Irgaphos 168, a phosphite process stabilizer, (Irganox B 561, by BASF) (hereinafter, referred to as "B 561")

**[Table 1A]**

| | E.4 | E.5 | E.6 | C.1 | C.2 | C.3 | C.7 |
|---|---|---|---|---|---|---|---|
| TPU1 (%) | 91.8 | 89.8 | 89.8 | 99.8 | 49.8 | 69.8 | 79.8 |
| ABCP | 2% | 2.5% | 7.5% | - | - | - | - |
| MC | 6% | 7.5% | 2.5% | - | 50% | 30% | 15% |
| EDAP-DOPO | - | - | - | - | - | - | 5% |
| OP 1240 | - | - | - | - | - | - | - |
| B85AX | - | - | - | - | - | - | - |
| PCO900 | - | - | - | - | - | - | - |
| APP | - | - | - | - | - | - | - |
| RDP | - | - | - | - | - | - | - |
| MP | - | - | - | - | - | - | - |
| | | | | | | | |
| B561 | 0.2% | 0.2% | 0.2% | 0.2% | 0.2% | 0.2% | 0.2% |
| | | | | | | | |
| UL-94 (1.6mm) | V0 | V0 | V0 | V2 | V2 | V2 | V2 |
| LOI | 26.8 | 26.9 | 27.0 | - | 26.5 | 23.1 | - |

**[Table 1B]**

| | C.8 | C.9 | C.10 | C.11 | C.12 | C.13 | C.14 |
|---|---|---|---|---|---|---|---|
| TPU1 (%) | 79.8 | 79.8 | 79.8 | 79.8 | 79.8 | 79.8 | 79.8 |
| ABCP | - | - | - | - | - | - | - |
| MC | - | 15% | - | 15% | - | 15% | - |
| EDAP-DOPO | 20% | - | - | - | - | - | - |
| OP 1240 | - | 5% | 20% | - | - | - | - |
| B85AX | - | - | - | 5% | 20% | - | - |
| PCO900 | - | - | - | - | - | 5% | 20% |
| APP | - | - | - | - | - | - | - |
| RDP | - | - | - | - | - | - | - |
| MP | - | - | - | - | - | - | - |
| | | | | | | | |
| B561 | 0.2% | 0.2% | 0.2% | 0.2% | 0.2% | 0.2% | 0.2% |
| | | | | | | | |
| UL-94(1.6mm) | V2 | V2 | V2 | V2 | V2 | V2 | V2 |
| LOI | - | - | - | - | - | - | - |

**[Table 1C]**

| | C.15 | C.16 | C.17 | C.18 | C.19 | C.20 |
|---|---|---|---|---|---|---|
| TPU1 (%) | 79.8 | 79.8 | 79.8 | 79.8 | 79.8 | 79.8 |
| ABCP | - | - | - | - | - | - |
| MC | 15% | - | 15% | - | 15% | - |
| EDAP-DOPO | - | - | - | - | - | - |
| OP 1240 | - | - | - | - | - | - |
| B85AX | - | - | - | - | - | - |
| PCO900 | - | - | - | - | - | - |
| APP | 5% | 20% | - | - | - | - |
| RDP | - | - | 5% | 20% | - | - |
| MP | - | - | - | - | 5% | 20% |
| | | | | | | |
| B561 | 0.2 % | 0.2% | 0.2% | 0.2% | 0.2% | 0.2% |
| | | | | | | |
| UL-94 (1.6mm) | V2 | V2 | V2 | V2 | V2 | V2 |
| LOI | - | - | - | - | - | - |

**[Table 2A]**

| | E.21 | E.22 | E.23 | E.24 |
|---|---|---|---|---|
| TPU1 | 89.8% | 84.8% | 74.8% | 74.8% |
| ABCP | 5% | 7.5% | 12.5% | 12.5% |
| MC | 5% | 7.5% | 12.5% | |
| MEL | | | | 12.5% |
| DEL | | | | |
| TALC | | | | |
| | | | | |
| B561 | 0.2% | 0.2% | 0.2% | 0.2% |
| | | | | |
| UL-94 (1.6mm) | V0 | V0 | V0 | V0 |
| LOI | 26.2 | 27.0 | 26.9 | 29.5 |

**[Table 2B]**

| | E.25 | E.26 | E.27 | E.28 | E.29 | E.30 |
|---|---|---|---|---|---|---|
| TPU1 | 74.8% | 74.8% | 74.8% | 74.8% | 59.8% | 74.8% |
| ABCP | 12.5% | 5% | 5% | 5% | 20% | 10% |
| MC | | 20% | | 15% | | 10% |
| MEL | | | 20% | 5% | 20% | |
| DEL | 12.5% | | | | | |
| TALC | | | | | | 5% |
| | | | | | | |
| B561 | 0.2% | 0.2% | 0.2% | 0.2% | 0.2% | 0.2% |
| | | | | | | |
| UL-94(1.6mm) | V0 | V0 | V0 | V0 | V0 | V0 |
| LOI | 27.4 | 25.8 | 28.2 | 27.7 | 31.1 | 25.6 |

### (Consideration on the Examples and Comparative examples)

From the results of Comparative example C.1 in Table 1A, it is understood that TPU without flame retardant has a performance of V2 in the UL-94 test.

From the results of Comparative example C.2 and Comparative example C.3, it is understood that when melamine cyanurate is used alone, a LOI value higher than 24 is achieved in the range of 30% by mass to 50% by mass. However, V0 classification is not achieved in the UL-94 test even at a concentration of 50% by mass.

From the results of Comparative examples C.8, C.10, C.12, C.14, C.16, C.18 and C.20, it is understood that phosphorus containing compounds which are different from the phosphoramidate compounds in an amount of 20% by mass loading are not sufficient to achieve V0 classification in the UL-94 test.

From the results of Example E.4, it is understood that a combination of cyclic phosphoramidate compound and melamine cyanurate at 8% by mass loading is able to achieve V0 classification in the UL-94 test. The Examples E.5, E.6 and E.21 show that a mixture of a cyclic phosphoramidate compound and melamine cyanurate, also in different ratio, at 10% by mass loading is able to achieve V0 classification in the UL-94 test and LOI higher than 24. In the cases where another flame retardant or another combination of flame retardants is used, such a small amount cannot achieve V0 classification in the UL-94 test. That is, a small amount of the combination of cyclic phosphoramidate compound and melamine cyanurate can achieve a high flame-retardance effect.

From the results of Comparative examples C.7, C.9, C.11, C.13, C.15, C.17 and C.19, it is understood that 20% by mass of a combination of a phosphorus containing compound which is different from the phosphoramidate compounds and melamine cyanurate is not sufficient to achieve V0 classification in the UL-94 test.

From the results shown in Tables 2A and 2B, it is understood that a mixture of cyclic phosphoramidate and triazine-based compound, according to the present invention, in the ratio between 4:1 to 1:4 at a concentration from 8% to 40% by mass with respect to total composition is very efficient as flame retardant for TPU.

The results in table 2B shown that the a mixture of phosphoramidate compound with melamine or a condensate of melamine as a triazine-based compound are useful to further increase LOI of the flame retardant thermoplastic polyurethane compositions of the present invention.

Moreover, Example E.30 shows that also with a filler like talc, the flame retardant performances is also able to achieve V0 classification in the UL-94 test and LOI higher than 24.

### Industrial Applicability

According to the present invention, excellent flame retardance is provided to a thermoplastic polyurethane resin composition.

The present invention has been exemplified so far with reference to the favorable embodiments of the present invention, but it should not be construed that the present invention is restricted by the embodiments. It is understood that the scope of the present invention should be construed only by the claims.

## Claims

1. A flame retardant thermoplastic polyurethane composition comprising:
a thermoplastic polyurethane resin,
a flame retardant composition comprising a phosphoramidate compound and a triazine-based compound and
an antioxidant,
wherein the phosphoramidate compound is represented by the general formula (I): 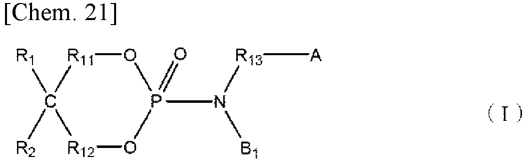
wherein R₁ and R₂ are each independently hydrogen atom or an alkyl group in which the number of carbon atoms is 1 to 3, R₁₁ and R₁₂ are each independently an alkylene group in which the number of carbon atoms is 1 to 3, R₁₃ is an alkylene group in which the number of carbon atoms is 1 to 6, B₁ is a hydrogen atom or an alkyl group in which the number of carbon atoms is 1 to 6, and A is a hydrogen atom or an organic group represented by general formula (II): 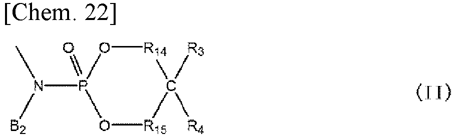
wherein R₃ and R₄ are each independently hydrogen atom or an alkyl group in which the number of carbon atoms is 1 to 3, R₁₄ and R₁₅ are each independently an alkylene group in which the number of carbon atoms is 1 to 3, and B₂ is a hydrogen atom or an alkyl group in which the number of carbon atoms is 1 to 6; and
wherein when A is a hydrogen atom and B₁ is an alkyl group in which the number of carbon atoms is 1 to 6, then B₁ and R₁₃-A may be bound to form a nitrogen-containing heterocycle with the nitrogen atom in the general formula (I), and
when A is an organic group represented by the general formula (II), B₂ is an alkyl group in which the number of carbon atoms is 1 to 6, and B₁ is an alkyl group in which the number of carbon atoms is 1 to 6, then B₁ and B₂ may be bound to form a nitrogen-containing heterocycle with the nitrogen atom in the general formula (I), the nitrogen atom in the general formula (II) and R₁₃, and
wherein the triazine-based compound is a compound having a 1,3,5-triazine structure or a 1,3,5-triazine fused ring structure, or a salt thereof.

2. The flame retardant thermoplastic polyurethane composition according to claim 1, wherein the triazine-based compound is a melamine, a condensate of melamine or a salt thereof.

3. The flame retardant thermoplastic polyurethane composition according to claim 1 or 2, wherein the triazine-based compound is a salt of melamine.

4. The flame retardant thermoplastic polyurethane composition according to any one of claims 1 to 3, wherein the triazine-based compound is a cyanurate salt of melamine.

5. The flame retardant thermoplastic polyurethane composition according to any one of claims 1 to 4, wherein in the general formula (I), R₁ and R₂ are methyl groups, and R₁₁ and R₁₂ are methylene groups.

6. The flame retardant thermoplastic polyurethane composition according to any one of claims 1 to 5, wherein in the general formula (I), A is an organic group represented by the general formula (II), R₃ and R₄ are methyl groups, and R₁₄ and R₁₅ are methylene groups.

7. The flame retardant thermoplastic polyurethane composition according to claim 6, wherein in the general formula (I), R₁₃ is an alkylene group in which the number of carbon atoms is 1 to 2.

8. The flame retardant thermoplastic polyurethane composition according to claim 6 or 7, wherein in the general formula (I), B₁ and B₂ are hydrogen atoms.

9. The flame retardant thermoplastic polyurethane composition according to any one of claims 6 to 8, wherein said phosphoramidate compound is represented by the formula (4):

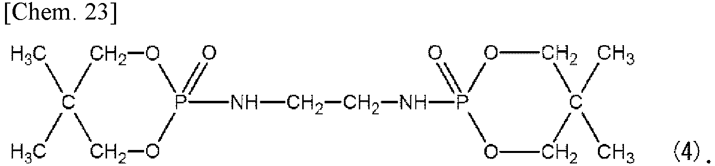

10. The flame retardant thermoplastic polyurethane composition according to any one of claims 1 to 9, wherein the mass ratio of "the phosphoramidate compound : triazine-based compound" is 1:9 to 9:1.

11. The flame retardant thermoplastic polyurethane composition according to any one of claims 1 to 10, wherein the thermoplastic polyurethane resin comprises polyether polyurethane, polyester polyurethane or polycarbonate polyurethane.

12. The flame retardant thermoplastic polyurethane composition according to any one of claims 1 to 11, wherein the total amount of the phosphoramidate compound and the triazine-based compound in the flame retardant thermoplastic polyurethane composition is 7 to 50 % by mass.

13. The flame retardant thermoplastic polyurethane composition according to any one of claims 1 to 12, wherein the antioxidant is a hindered phenol compound, a phosphite compound or a mixture thereof.

14. The flame retardant thermoplastic polyurethane composition according to claim 13, wherein the antioxidant is a mixture of a hindered phenol heat stabilizer and a phosphite process stabilizer.

15. The flame retardant thermoplastic polyurethane composition according to any one of claims 1 to 14, further comprising another additive.

## Patentansprüche

1. Flammhemmende thermoplastische Polyurethanzusammensetzung, die
ein thermoplastisches Polyurethanharz,
eine flammhemmende Zusammensetzung, die eine Phosphoramidatverbindung und eine Verbindung auf Triazinbasis umfasst, und
ein Antioxidans umfasst,
wobei die Phosphoramidatverbindung durch die allgemeine Formel (I) dargestellt wird: 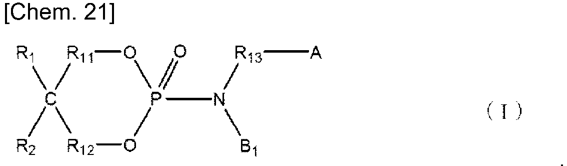
wobei R₁ und R₂ jeweils unabhängig voneinander ein Wasserstoffatom oder eine Alkylgruppe mit 1 bis 3 Kohlenstoffatomen sind, R₁₁ und R₁₂ jeweils unabhängig voneinander eine Alkylengruppe mit 1 bis 3 Kohlenstoffatomen sind, R₁₃ eine Alkylengruppe mit 1 bis 6 Kohlenstoffatomen ist, B₁ ein Wasserstoffatom oder eine Alkylgruppe mit 1 bis 6 Kohlenstoffatomen ist und A ein Wasserstoffatom oder eine organische Gruppe der allgemeinen Formel (II) ist: 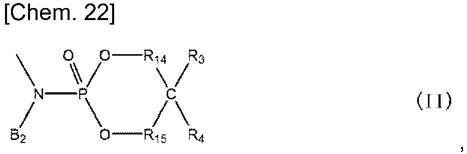
wobei R₃ und R₄ jeweils unabhängig voneinander ein Wasserstoffatom oder eine Alkylgruppe mit 1 bis 3 Kohlenstoffatomen sind, R₁₄ und R₁₅ jeweils unabhängig voneinander eine Alkylengruppe mit 1 bis 3 Kohlenstoffatomen sind und B₂ ein Wasserstoffatom oder eine Alkylgruppe mit 1 bis 6 Kohlenstoffatomen ist und
wobei, wenn A ein Wasserstoffatom ist und B₁ eine Alkylgruppe mit 1 bis 6 Kohlenstoffatomen ist, B₁ und R₁₃-A gebunden sein können, um einen stickstoffhaltigen Heterocyclus mit dem Stickstoffatom in der allgemeinen Formel (I) zu bilden, und
wenn A eine organische Gruppe ist, die durch die allgemeine Formel (II) dargestellt wird, B₂ eine Alkylgruppe mit 1 bis 6 Kohlenstoffatomen ist und B₁ eine Alkylgruppe mit 1 bis 6 Kohlenstoffatomen ist, B₁ und B₂ gebunden sein können, um einen stickstoffhaltigen Heterocyclus mit dem Stickstoffatom in der allgemeinen Formel (I), dem Stickstoffatom in der allgemeinen Formel (II) und R₁₃ zu bilden, und
wobei die Verbindung auf Triazinbasis eine Verbindung mit einer 1,3,5-Triazin-Struktur oder einer anellierten 1,3,5-Triazin-Ringstruktur oder ein Salz davon ist.

2. Flammhemmende thermoplastische Polyurethanzusammensetzung nach Anspruch 1, bei der die Verbindung auf Triazinbasis ein Melamin, ein Kondensat von Melamin oder ein Salz davon ist.

3. Flammhemmende thermoplastische Polyurethanzusammensetzung nach Anspruch 1 oder 2, bei der die Verbindung auf Triazinbasis ein Salz von Melamin ist.

4. Flammhemmende thermoplastische Polyurethanzusammensetzung nach einem der Ansprüche 1 bis 3, bei der die Verbindung auf Triazinbasis ein Cyanuratsalz von Melamin ist.

5. Flammhemmende thermoplastische Polyurethanzusammensetzung nach einem der Ansprüche 1 bis 4, bei der in der allgemeinen Formel (I) R₁ und R₂ Methylgruppen sind und R₁₁ und R₁₂ Methylengruppen sind.

6. Flammhemmende thermoplastische Polyurethanzusammensetzung nach einem der Ansprüche 1 bis 5, bei der in der allgemeinen Formel (I) A eine organische Gruppe ist, die durch die allgemeine Formel (II) dargestellt wird, R₃ und R₄ Methylgruppen sind und R₁₄ und R₁₅ Methylengruppen sind.

7. Flammhemmende thermoplastische Polyurethanzusammensetzung nach Anspruch 6, bei der in der allgemeinen Formel (I) R₁₃ eine Alkylengruppe mit 1 bis 2 Kohlenstoffatomen ist.

8. Flammhemmende thermoplastische Polyurethanzusammensetzung nach Anspruch 6 oder 7, bei der in der allgemeinen Formel (I) B₁ und B₂ Wasserstoffatome sind.

9. Flammhemmende thermoplastische Polyurethanzusammensetzung nach einem der Ansprüche 6 bis 8, bei der die Phosphoramidatverbindung durch die Formel (4) dargestellt wird:

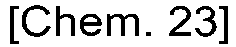

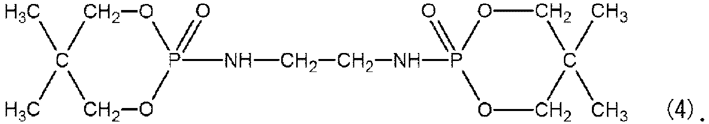

10. Flammhemmende thermoplastische Polyurethanzusammensetzung nach einem der Ansprüche 1 bis 9, bei der das Massenverhältnis von "Phosphoramidatverbindung : Verbindung auf Triazinbasis" 1:9 bis 9:1 beträgt.

11. Flammhemmende thermoplastische Polyurethanzusammensetzung nach einem der Ansprüche 1 bis 10, bei der das thermoplastische Polyurethanharz Polyether-Polyurethan, Polyester-Polyurethan oder Polycarbonat-Polyurethan umfasst.

12. Flammhemmende thermoplastische Polyurethanzusammensetzung nach einem der Ansprüche 1 bis 11, bei der die Gesamtmenge der Phosphoramidatverbindung und der Verbindung auf Triazinbasis in der flammhemmenden thermoplastischen Polyurethanzusammensetzung 7 bis 50 Massen-% beträgt.

13. Flammhemmende thermoplastische Polyurethanzusammensetzung nach einem der Ansprüche 1 bis 12, bei der das Antioxidans eine gehinderte Phenolverbindung, eine Phosphitverbindung oder eine Mischung davon ist.

14. Flammhemmende thermoplastische Polyurethanzusammensetzung nach Anspruch 13, bei der das Antioxidans eine Mischung aus einem gehinderten Phenol-Wärmestabilisator und einem Phosphit-Prozessstabilisator ist.

15. Flammhemmende thermoplastische Polyurethanzusammensetzung nach einem der Ansprüche 1 bis 14, die ferner ein anderes Additiv umfasst.

## Revendications

1. Composition de polyuréthane thermoplastique ignifuge, qui comprend :
- une résine polyuréthane thermoplastique,
- une composition ignifuge comprenant un composé de type phosphoramidate et un composé de type triazine,
- et un antioxydant,
dans laquelle le composé de type phosphoramidate est un composé représenté par la formule générale (I) : 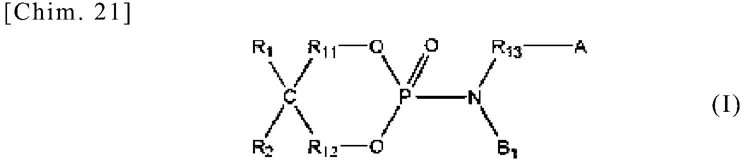
dans laquelle R₁ et R₂ représentent chacun, indépendamment, un atome d'hydrogène ou un groupe alkyle dont le nombre d'atomes de carbone vaut de 1 à 3, R₁₁ et R₁₂ représentent chacun, indépendamment, un groupe alcanediyle dont le nombre d'atomes de carbone vaut de 1 à 3, R₁₃ représente un groupe alcanediyle dont le nombre d'atomes de carbone vaut de 1 à 6, B₁ représente un atome d'hydrogène ou un groupe alkyle dont le nombre d'atomes de carbone vaut de 1 à 6, et A représente un atome d'hydrogène ou un groupe organique représenté par la formule générale (II) : 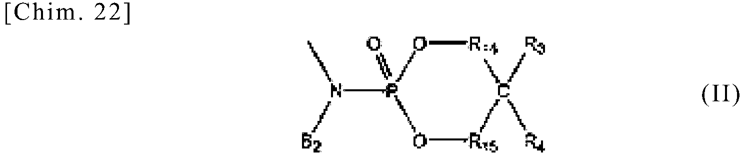
dans laquelle R₃ et R₄ représentent chacun, indépendamment, un atome d'hydrogène ou un groupe alkyle dont le nombre d'atomes de carbone vaut de 1 à 3, R₁₄ et R₁₅ représentent chacun, indépendamment, un groupe alcanediyle dont le nombre d'atomes de carbone vaut de 1 à 3, et B₂ représente un atome d'hydrogène ou un groupe alkyle dont le nombre d'atomes de carbone vaut de 1 à 6,
étant entendu
que, si A représente un atome d'hydrogène et B₁ représente un groupe alkyle dont le nombre d'atomes de carbone vaut de 1 à 6, alors les groupes représentés par B₁ et R₁₃-A peuvent être raccordés pour former un hétérocycle azoté avec l'atome d'azote figurant dans la formule générale (I),
et que, si A représente un groupe organique de formule générale (II), B₂ représente un groupe alkyle dont le nombre d'atomes de carbone vaut de 1 à 6 et B₁ représente un groupe alkyle dont le nombre d'atomes de carbone vaut de 1 à 6, alors les groupes représentés par B₁ et B₂ peuvent être raccordés pour former un hétérocycle azoté avec l'atome d'azote figurant dans la formule générale (I), l'atome d'azote figurant dans la formule générale (II) et le groupe représenté par R₁₃,
et dans laquelle composition le composé de type triazine est un composé présentant une structure de 1,3,5-triazine ou une structure de cycles de 1,3,5-triazine condensés, ou un sel d'un tel composé.

2. Composition de polyuréthane thermoplastique ignifuge, conforme à la revendication 1, dans laquelle le composé de type triazine est une mélamine, un produit de condensation de mélamine ou un sel d'un tel composé.

3. Composition de polyuréthane thermoplastique ignifuge, conforme à la revendication 1 ou 2, dans laquelle le composé de type triazine est un sel de mélamine.

4. Composition de polyuréthane thermoplastique ignifuge, conforme à l'une des revendications 1 à 3, dans laquelle le composé de type triazine est un sel de type cyanurate de mélamine.

5. Composition de polyuréthane thermoplastique ignifuge, conforme à l'une des revendications 1 à 4, dans laquelle, dans la formule générale (I), R₁ et R₂ représentent des groupes méthyle, et R₁₁ et R₁₂ représentent des groupes méthanediyle.

6. Composition de polyuréthane thermoplastique ignifuge, conforme à l'une des revendications 1 à 5, dans laquelle, dans la formule générale (I), A représente un groupe organique représenté par la formule générale (II), R₃ et R₄ représentent des groupes méthyle, et R₁₄ et R₁₅ représentent des groupes méthanediyle.

7. Composition de polyuréthane thermoplastique ignifuge, conforme à la revendication 6, dans laquelle, dans la formule générale (I), R₁₃ représente un groupe alcanediyle dont le nombre d'atomes de carbone vaut 1 ou 2.

8. Composition de polyuréthane thermoplastique ignifuge, conforme à la revendication 6 ou 7, dans laquelle, dans la formule générale (I), B₁ et B₂ représentent des atomes d'hydrogène.

9. Composition de polyuréthane thermoplastique ignifuge, conforme à l'une des revendications 6 à 8, dans laquelle ledit composé de type phosphoramidate est représenté par la formule (4) :

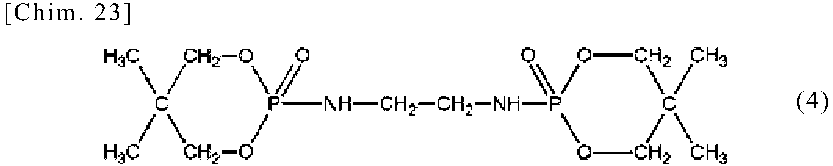

10. Composition de polyuréthane thermoplastique ignifuge, conforme à l'une des revendications 1 à 9, dans laquelle le rapport massique du composé de type phosphoramidate au composé de type triazine vaut de 1/9 à 9/1.

11. Composition de polyuréthane thermoplastique ignifuge, conforme à l'une des revendications 1 à 10, dans laquelle la résine polyuréthane thermoplastique comprend un polyéther-polyuréthane, un polyester-polyuréthane ou un polycarbonate-polyuréthane.

12. Composition de polyuréthane thermoplastique ignifuge, conforme à l'une des revendications 1 à 11, dans laquelle la quantité totale de composé de type phosphoramidate et de composé de type triazine représente de 7 à 50 % en masse de la composition de polyuréthane thermoplastique ignifuge.

13. Composition de polyuréthane thermoplastique ignifuge, conforme à l'une des revendications 1 à 12, dans laquelle l'antioxydant est un composé de type phénol encombré, un composé de type phosphite ou un mélange de tels composés.

14. Composition de polyuréthane thermoplastique ignifuge, conforme à la revendication 13, dans laquelle l'antioxydant est un mélange d'un stabilisant thermique de type phénol encombré et d'un stabilisant de procédé de type phosphite.

15. Composition de polyuréthane thermoplastique ignifuge, conforme à l'une des revendications 1 à 14, qui comprend en outre un autre adjuvant.
